# EUROPEAN PATENT APPLICATION

(11) **EP 1 090 619 A2**
(43) Date of publication of application: **11.04.2001**
(21) Application number: 00121681.1
(22) Date of filing: 04.10.2000
(51) Int. Cl.: A61G 3/06, B60P 1/43

(54) **Ramp assembly**

(30) Priority: 05.10.1999 GB 9923453
(71) Applicant: MANGANESE BRONZE COMPONENTS LIMITED, Ipswich, Suffolk IP2 0HX (GB)
(72) Inventor: Rose, Peter Andrew, Manganese Bronze Compon. Ltd., Beverley, East Yorkshire HU17 OJL (GB); Spencer, Peter E.J., Manganese Bronze Compon. Ltd., Beverley, East Yorkshire HU17 OJL (GB)
(74) Representative: Wardley, Diana Mary

(57) **Abstract**

A ramp assembly for access to a vehicle such as a bus comprises a frame structure (10-14), guide members (20) carried by the frame structure and support members (21, 22) movable along them, a ramp member (23) movable by the support members (22) to be deployed outwardly of the frame structure and retracted inwardly thereof, pivot means connecting the ramp member to the support members, and a spring means (26) for supporting a substantial part of the weight of the ramp member when it is deployed and pivots downwardly.

## Description

This invention relates to a ramp assembly which may be utilised for facilitating access by mobility-impaired persons to a passenger carrying vehicle such as, for example, a bus.

More particularly, the present invention relates to a ramp assembly having a ramp member which is able to deployed by linear movement outwardly of a vehicle in which the ramp assembly is installed and, subsequent to or in the final stages of such linear movement, undergo a downward pivoting movement about a pivot axis in the region of an inboard end of the ramp member so that the outboard end of the ramp member can rest upon the adjacent ground (e.g. pavement) surface. After use of the ramp, retraction thereof involves a pivotal movement to lift the oatboard end thereof clear of the ground surface, such pivotal movement taking place in the course of initial linear movement of the ramp member inwardly of the vehicle followed by a solely linear movement until the ramp is completely retracted.

It is broadly the object of the present invention to provide one or more improvements in a ramp of the kind set forth above, which comprises
a frame structure;
guide means carried by the frame structure;
support means movable along the guide means;
a ramp member connected to the support means for movement therewith so that the ramp member can be deployed outwardly of an end (herein called the outer end) of the frame structure and be retracted inwardly of the frame structure; and
pivot means connecting the ramp member to the support means so that, when the ramp member is deployed outwardly of the frame structure, its outer end can be moved downwardly to a ground surface.

In accordance with one aspect of the invention, there is provided spring means for supporting a substantial part of the weight of the ramp member when it is deployed outwardly of the frame structure.

Preferably the spring means comprises a spring member having respective parts connected to the ramp member and to the support means therefor. Conveniently such a spring member is a torsion bar, extending transversely of the ramp member i.e. lengthwise of an axis about which the pivotal movement of the ramp member can take place.

Preferably the guide means comprises respective guide members provided one at each side of the frame structure, and the support means comprises respective carriage members movable along the guide members. The carriage members preferably engage the guide members by rolling elements e.g. two rollers on each carriage member.

The frame structure may at its outer end support the ramp member in the course of its deployment and retraction, the downward pivoting movement of the ramp member being permitted when the underside of the ramp member clears the frame structure in the course of deployment of the ramp member. In the course of retraction of the ramp member, the ramp member is firstly caused to be pivoted upwardly so that its outer end is lifted clear of the ground surface and in the course of further retraction the under-surface of the ramp member is supported so that the ramp member aligns with the guide members.

It will be appreciated that the spring means which, in effect, counterbalances most of the weight of the ramp member, has the effect that in the first stage of retraction of the ramp member where it has to be lifted from its downwardly pivoted position until it aligns with the guide means to be able to retract into the frame structure, the force which has to be exerted to do this is very substantially reduced. The result is that wear is lessened, and a drive mechanism for operating the ramp assembly requires less power to operate it.

Preferably the ramp assembly includes motor means e.g. an electric motor, carried by the frame, and transmission means by which the output of such a motor is transmitted to the support means which is movable along the guide means and carries the ramp member.

A preferred transmission means comprises a layshaft extending across the frame structure and driven from the motor, preferably a DC reversible motor by way of a reduction gearbox. A sprocket may be provided at each end of the layshaft and respective toothed belts be entrained around the sprockets and respective further sprockets so that the belts extend lengthwise of the guide members. The belts may then respectively engage the carriage members for moving same. An appropriate gear ratio may be provided between the motor and the layshaft, so that if necessary the ramp may be deployed or retracted manually, i.e. back driving is possible. Deployment of the ramp in a time of the order of 7-8 seconds may be aimed for.

Preferably the frame structure carries a lid member which overlies the ramp member when the latter is retracted into the frame structure, the lid member being arranged to fit flush with the adjacent floor surface in a vehicle in which the ramp assembly installed. The lid member must, of course, be of sufficient strength to support a person or persons standing thereon.

Preferably there is a lid part at the outermost end of the frame structure and which is pivotable downwardly to align or substantially align with the upper surface of the ramp member when it is deployed and downwardly pivoted. Such a downwardly pivotable lid part preferably is arranged to be pivotally moved by engagement with the ramp member in the course of deployment and retraction thereof.

The frame structure preferably is in the form of a "cassette" i.e. a self-contained unit which can be installed in the floor structure of a vehicle adjacent an exit door thereof, merely requiring the provision of a suitably dimensioned opening in the vehicle floor structure and adjacent structural members to which the ramp assembly can be secured. However it will be appreciated that certain features of the ramp assembly in accordance with the invention may be provided in an installation which utilises structural members of the vehicle for carrying various parts thereof, rather than being a completely self-contained unit.

These and other aspects of the invention will now be described by way of example with reference to the accompany drawings, of which
Figure 1 is a side elevation of an embodiment of a ramp assembly in accordance with the invention, with the ramp retracted;
Figure 2 is a view as Figure 1 but with the ramp deployed;
Figure 3 is a diagrammatic plan view of part of the ramp assembly illustrating certain features thereof.

Referring to the drawings, the ramp assembly there illustrated comprises a frame structure which is intended to be installed in the floor structure of a vehicle such as a bus adjacent an exit door thereof. As illustrated the frame structure includes a transverse member 10 at the innermost end of the frame structure (i.e. that which lies inboard of the vehicle when installed), above which there is shown a capping extrusion 11 which overlies the adjacent floor surface when installed. The frame structure further comprises a base 12 stiffened adjacent the outermost end of the frame structure by a stiffener 13, and opposed side walls one of which is indicated at 14. The top of the frame structure is covered by a cover or lid member 15 stiffened by stiffeners 16 so that it is able to support the weight of one or more persons standing thereon, and a lid part 17 at the outermost end of the frame structure is pivoted to the lid member 15 by a hinge 18 which provides a pivotal axis extending transversely of the frame structure.

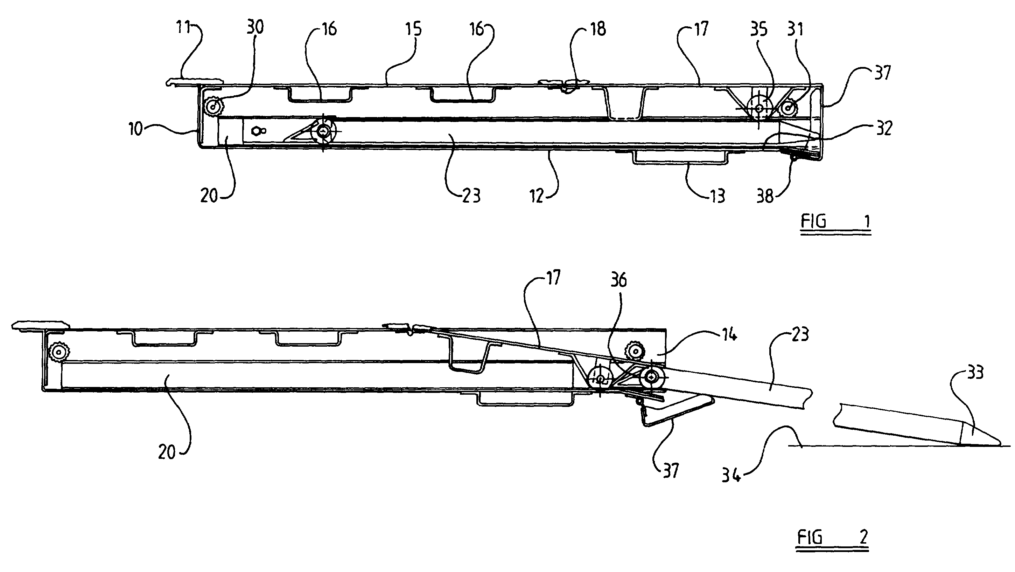

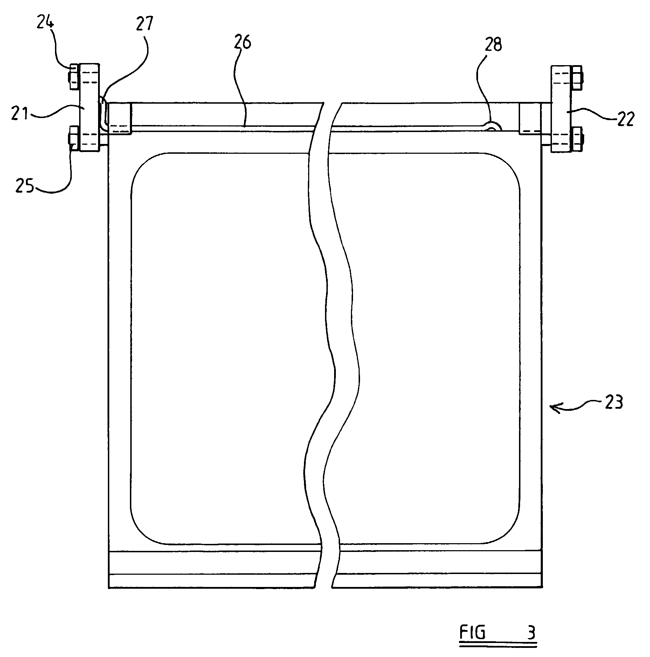

At opposite sides of the frame structure there are respective guide members as indicated at 20, the guide members for example being elongate generally U-shaped members facing one another. These cooperate with respective carriage members 21, 22 as shown in Figure 3, which constitute support means for a ramp member 23. The carriage members engage the guide members by rollers as indicated at 24, 25 for the carriage member 21. The ramp member 23, which preferably comprises a hot-bonded aluminium honeycomb sandwich structure, is pivotally connected to the carriage members 21, 22 and a torsion bar 26 which extends transversely of the ramp member adjacent its pivotal connection to the carriage members has one end 27 engaging the carriage member 21 and the other end 28 engaging the ramp member. The torsion bar 26 is so dimensioned and arranged that it is able to support a substantial part of the weight of the ramp member when the latter is deployed outwardly of the frame structure as described hereafter.

The carriage members 21, 22 are moved lengthwise of the guide members as 20 by a drive system including a reversible DC electric motor which, through a reduction gearbox, drives a layshaft extending transversely of the frame structure and having sprockets at its ends which engage respective toothed drive belts each of which extends within the frame structure lengthwise thereof, being entrained about a further sprocket at the outboard end of the frame structure. One of the sprockets at an end of the layshaft is indicated at 30 and a sprocket at the opposite end of the frame structure is indicated at 31. The toothed belts, which are not shown in the drawings, engage the carriage members 21, 22 respectively. The electric motor and reduction gearbox are also not shown in the drawings; they would be disposed adjacent the layshaft carrying the sprockets as 30, beneath the lid 15.

The ramp member 23 is pivotally carried by the carriage members 21, 22 at its innermost end and at its outer end it rests on a support surface in the region 32 at the outermost end of the frame structure. When the carriage members are moved lengthwise of the guide members by operation of the electric motor, the ramp member is moved by the carriage members outwardly or inwardly from the outer end of the frame structure. Starting from the fully-retracted position of the ramp member as illustrated in Figure 1, the ramp member remains aligned with the guide members until it approaches its fully outwardly deployed position as illustrated in Figure 2, whereupon it can pivot downwardly about the carriage members until the outermost end (33) rests upon a ground surface 34 adjacent the vehicle. The strength of the torsion bar 26 is arranged so that it does not totally balance the weight of the ramp member, so that when the ramp member is deployed it pivots downwardly under its own weight to contact the ground surface. In the reverse direction of operation of the electric motor to cause retraction of the ramp member, a first part of such retraction causes the ramp member to be pivoted upwardly to align with the guide members as 20, after which the ramp member is retracted inwardly of the frame structure to return to its starting position as shown in Figure 1.

The part 17 of the lid member of the ramp assembly, which is pivotally mounted by hinge 18, has a roller 35 which rests against the top surface of the ramp member. When the ramp member is retracted, this supports the upper surface of the lid part 17 in line with that of the lid part 15 but when the ramp is deployed the innermost end of the ramp member clears the roller 35 so that the lid 17 pivots downwardly so that its upper surface is substantially in line with the upper surface of the ramp member. In the course of retraction of the ramp member, the roller 35 travels up a cam surface 36 at the inner end of the ramp member to lift the lid part 17 to its raised position.

The ramp assembly further comprises a spring-loaded cover flap 37 at its outer end from which the ramp member is deployed, the flap 37 being hinged at 38 so that initial contact of the ramp member therewith in the course of its deployment causes the flap to be pivoted downwardly so as not to obstruct movement of the ramp member. When the ramp member has been fully retracted, the flap 37 is pivoted upwardly by the spring which loads it. The flap 37 has the effect of preventing ingress of rain, dirt and so on to the interior of the frame structure of the ramp assembly when the ramp is retracted. Suitable seals will be provided for this purpose, appropriately positioned in relation to the flap 37 and the lid part 17.

In the course of power-operated deployment of the ramp member, such movement would normally cease after the ramp member has reached a position at which it is able to pivot downwardly to contact the ground surface. However some over-travel of the transmission is possible without any damage occurring.

It will be noted that the axis about which the ramp member is able to pivot downwardly is a substantial distance beneath the upper surface of the frame structure of the ramp assembly. This gives rise to advantageous geometry of the ramp assembly.

A ramp in accordance with the invention is intended primarily for unsupervised operation at an exit doorway of a vehicle. A control system would be provided including various operation features to ensure safety. For example, the ramp may not be operated unless the associated door(s) has been fully closed. The ramp may only be deployed in response to a sustained command from the vehicle's driver, whilst if the command is removed before full deployment has been achieved the ramp will automatically retract fully. Once fully deployed, the ramp may be retracted in response to a momentary command from the driver. Correspondingly, if the ramp is neither deployed nor fully retracted, the door may not be opened from the driver's remote controls.

Such operation functions of the ramp may be administered by a dedicated electronic control unit incorporating a microprocessor. The current consumption of the electric motor in the ramp assembly may be monitored, and if a preset threshold is exceeded this is interpreted as the meeting of an obstruction by the ramp member. If obstructed during extension, the ramp will retract fully, while if obstructed during retraction the ramp will cease movement. In either case, the system may be inhibited for a preset time before the driver may re-attempt ramp operation.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A ramp assembly comprising:
a frame structure (10-14);
guide means (20) carried by the frame structure;
support means (21, 22) movable along the guide means;
a ramp member (23) connected to the support means for movement therewith so that the ramp member can be deployed outwardly of an outer end of the frame structure and be retracted inwardly of the frame structure; and
pivot means connecting the ramp member to the support means so that, when the ramp member is deployed outwardly of the frame structure, its outer end can be moved downwardly to a ground surface;
and spring means (26) for supporting a substantial part of the weight of the ramp member when it is deployed outwardly of the frame structure.

2. A ramp assembly according to Claim 1 further characterised in that the spring means comprises a spring member (26) having respective parts connected to the ramp member and to the support means therefor.

3. A ramp assembly according to Claim 2 further characterised in that the spring member (26) is a torsion bar, extending transversely of the ramp member and lengthwise of an axis about which the pivotal movement of the ramp member can take place.

4. A ramp assembly according to any of the preceding claims further characterised in that the guide means comprises respective guide members (20) provided one at each side of the frame structure, and the support means comprises respective carriage members (21, 22) movable along the guide members.

5. A ramp assembly according to any one of Claims 1 to 4 further characterised in that the frame structure, at its outer end (32), supports the ramp member (23) in the course of its deployment and retraction, the downward pivoting movement of the ramp member being permitted when the underside of the ramp member clears the frame structure in the course of deployment of the ramp member.

6. A ramp assembly according to any of the preceding claims further comprising motor means carried by the frame, and transmission means by which the output of said motor means is transmitted to the support means which is movable along the guide means and carries the ramp member.

7. A ramp assembly according to Claim 6 as appendant to Claim 4 further characterised in that the transmission means comprises a layshaft extending across the frame structure and driven from the motor, and respective toothed belts extending lengthwise of the guide members, and engaging the carriage members for moving same.

8. A ramp assembly according to any of the preceding claims further characterised in that the frame structure carries a lid member (15) which overlies the ramp member when the latter is retracted into the frame structure, the lid member being arranged to fit flush with an adjacent floor surface in a vehicle in which the ramp assembly is installed.

9. A ramp assembly according to any one of the preceding claims further characterised in that there is a lid part (17) at the outermost end of the frame structure and which is pivotable downwardly to align or substantially align with the upper surface of the ramp member when it is deployed and downwardly pivoted.

10. A ramp assembly according to Claim 9 further characterised in that said lid part (17) is arranged to be pivotally moved by engagement with the ramp member in the course of deployment and retraction thereof.

11. A ramp assembly according to any one of the preceding claims further characterised in that the frame structure is in the form of a self-contained unit which can be installed in the floor structure of a vehicle adjacent a door thereof.
